# EUROPEAN PATENT APPLICATION

(11) **EP 4 333 318 A1**
(43) Date of publication of application: **06.03.2024**
(21) Application number: 22795274.4
(22) Date of filing: 01.03.2022
(51) Int. Cl.: H04B 7/026, H04B 7/15, H04L 27/26

(54) **COMMUNICATION DEVICE, COMMUNICATION SYSTEM, AND COMMUNICATION METHOD**

(30) Priority: 28.04.2021 JP 2021076552
(71) Applicant: Sony Group Corporation, Tokyo 108-0075 (JP)
(72) Inventor: MATSUDA, Hiroki, Tokyo 108-0075 (JP); TSUDA, Shinichiro, Tokyo 108-0075 (JP)
(74) Representative: Witte, Weller & Partner Patentanwälte mbB
(86) International application number: PCT/JP2022/008536
(87) International publication number: WO 2022/230351

(57) **Abstract**

A communication apparatus (20, 40) includes a control unit (23, 43). The control unit (23, 43) generates a radio signal including a first segment including transmission data and a second segment not including the transmission data, and transmits the radio signal via a plurality of propagation paths.

## Description

### Field

The present disclosure relates to a communication apparatus, a communication system, and a communication method.

### Background

In recent years, with increasing demands for wide area coverage, connection stability, and the like, studies on a non-terrestrial network (NTN) in which a wireless network is provided from a device floating in the air or space have been started. In the non-terrestrial network, the wireless network is provided to a terminal device via a satellite station or an aircraft. In addition, in the non-terrestrial network, integrated operation between a terrestrial network and the non-terrestrial network is facilitated by using a same radio access system as that of the terrestrial network.

Compared with the terrestrial network, the non-terrestrial network has a very long propagation distance between the base station and the satellite and between the satellite and the terminal, and thus has a problem that reception power becomes very small and reception error rate characteristics deteriorate. In order to compensate for a decrease in the reception power due to long-distance transmission, Patent Literature 1 discloses a technique for switching transmission control depending on which of the terrestrial network and the non-terrestrial network a communication apparatus accesses.

### Citation List

### Patent Literature

Patent Literature 1: WO 2020/026734 A

### Summary

### Technical Problem

As a method of compensating for the decrease in the reception power due to the long-distance transmission, for example, a method of improving a reception gain by transmitting the same signal via different propagation paths such as transmitting the same signal using a plurality of satellites is conceivable. At this time, the signal is transmitted and received via different propagation paths for each of the plurality of satellites, but since the radio wave propagation distance between the plurality of paths is greatly different, a problem of a larger difference in propagation delay between the paths occurs. As described above, even in a case where the path difference between the plurality of propagation paths is large and the propagation delay difference is large, a technique for improving the reception gain and suppressing the deterioration of the reception error rate characteristics is required.

Therefore, the present disclosure proposes a mechanism capable of improving the reception gain so as to further suppress the deterioration of the reception error rate characteristics.

Note that the above problem or object is merely one of a plurality of problems or objects that can be solved or achieved by a plurality of embodiments disclosed in the present specification.

### Solution to Problem

According to the present disclosure, a communication apparatus is provided. The communication apparatus includes a control unit. The control unit generates a radio signal including a first segment including transmission data and a second segment not including the transmission data, and transmits the radio signal via a plurality of propagation paths.

### Brief Description of Drawings

FIG. 1 is a diagram illustrating a configuration example of a communication system according to an embodiment of the present disclosure.
FIG. 2 is a diagram illustrating an example of a wireless network provided by the communication system.
FIG. 3 is a diagram illustrating an outline of satellite communication provided by the communication system.
FIG. 4 is a diagram illustrating an example of a cell configured by a non-geostationary satellite.
FIG. 5 is a diagram illustrating a configuration example of a management device according to the embodiment of the present disclosure.
FIG. 6 is a diagram illustrating a configuration example of a ground station according to the embodiment of the present disclosure.
FIG. 7 is a diagram illustrating a configuration example of a satellite station according to the embodiment of the present disclosure.
FIG. 8 is a diagram illustrating a configuration example of a terminal device according to the embodiment of the present disclosure.
FIG. 9 is a diagram illustrating an example of antenna diversity transmission and reception using a plurality of satellite stations.
FIG. 10 is a diagram illustrating an example of a physical layer frame structure.
FIG. 11 is a diagram illustrating an example of a physical layer frame configuration according to the embodiment of the present disclosure.
FIG. 12 is a diagram illustrating a decoding process of a first reception signal according to the embodiment of the present disclosure.
FIG. 13 is a diagram illustrating a decoding process of a second reception signal according to the embodiment of the present disclosure.
FIG. 14 is a sequence diagram illustrating an operation of satellite diversity communication of the communication system according to the embodiment of the present disclosure.
FIG. 15 is a diagram illustrating an example of a frame configuration according to a first modification of the embodiment of the present disclosure.
FIG. 16 is a diagram illustrating an example of a communication system according to a second modification of the embodiment of the present disclosure.

### Description of Embodiments

Hereinafter, an embodiment of the present disclosure will be described in detail with reference to the accompanying drawings. Note that, in the present specification and the drawings, components having substantially the same functional configuration are denoted by the same reference signs to omit redundant description.

In addition, in the present specification and the drawings, a plurality of components having substantially the same functional configurations may be distinguished by attaching a different number or alphabet after the same reference sign. For example, a plurality of configurations having substantially the same functional configuration is distinguished as terminal devices 40₁, 40₂, and 40₃ as necessary. However, when it is not particularly necessary to distinguish each of the plurality of components having substantially the same functional configuration, only the same reference sign is given. For example, in a case where it is not necessary to particularly distinguish the terminal devices 40₁, 40₂, and 40₃, they are simply referred to as terminal devices 40.

Furthermore, in the present specification and the drawings, specific values may be indicated and described, but the values are merely examples, and other values may be applied.

Furthermore, resources in the present specification and the drawings represent Frequency, Time, Resource Element (including REG, CCE, and CORESET), Resource Block, Bandwidth Part, Component Carrier, Symbol, Sub-Symbol, Slot, Mini-Slot, Subslot, Subframe, Frame, PRACH occasion, Occasion, Code, Multi-access physical resource, Multi-access signature, Subcarrier Spacing (Numerology), and the like.

In the description below, one or more embodiments (including examples and modifications) can be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

### <<1. Outline>>

Radio access technology (RAT) such as long term evolution (LTE) and new radio (NR) has been studied in the third generation partnership project (3GPP). The LTE and NR are types of cellular communication technology, and enable mobile communication of a terminal device by arranging a plurality of cellular areas covered by a base station. Here, a single base station may manage a plurality of cells.

Note that, in the following description, the "LTE" includes LTE-Advanced (LTE-A), LTE-Advanced Pro (LTE-A Pro), and evolved universal terrestrial radio access (EUTRA). Still more, the NR includes new radio access technology (NRAT) and further EUTRA (FEUTRA). Note that a single base station may manage a plurality of cells. In the following description, a cell corresponding to the LTE is referred to as an LTE cell, and a cell corresponding to the NR is referred to as an NR cell.

The NR is the next generation (fifth generation) radio access technology (RAT) of the LTE. The NR is the radio access technology that can support various use cases including enhanced mobile broadband (eMBB), massive machine type communications (mMTC), and ultra-reliable and low latency communications (URLLC). The NR has been studied aiming at a technical framework corresponding to use scenarios, requirements, arrangement scenarios, and the like in these use cases.

Furthermore, in the NR, studies on non-terrestrial networks have started due to an increasing demand for wide area coverage, connection stability, and the like. In the non-terrestrial network, a wireless network is scheduled to be provided to the terminal device via the base station other than a ground station such as a satellite station or an aircraft station. The base station other than the ground station is referred to as a non-ground station or a non-ground base station. A wireless network provided by the ground station is referred to as a terrestrial network (TN). By using the same radio access system for the terrestrial network and the non-terrestrial network, integrated operation of the terrestrial network and the non-terrestrial network becomes possible.

Compared with the terrestrial network, the non-terrestrial network has a very long propagation distance between the base station and the satellite and between the satellite and the terminal, and thus has a problem that reception power becomes very small and reception error rate characteristics deteriorate.

As a method of compensating for the decrease in the reception power due to the long-distance transmission, for example, a method of improving a reception gain by transmitting the same signal via different propagation paths such as transmitting the same signal using a plurality of satellites is conceivable. At this time, the signal is transmitted and received via different propagation paths for each of the plurality of satellites, but since the radio wave propagation distance between the plurality of paths is greatly different, a problem of a larger difference in propagation delay between the paths occurs.

Therefore, in the present embodiment, this problem is solved by the following means.

For example, the communication system of the present embodiment is a communication system in which a transmission device transmits a radio signal to a reception device via a plurality of propagation paths. The transmission device included in the communication system generates the radio signal having a first segment not including information regarding transmission data and a second segment including information regarding transmission data, and transmits the radio signal generated to the reception device via the plurality of propagation paths.

As a result, even when a propagation delay difference occurs between the plurality of propagation paths, the reception device can decode one reception signal by using an other reception signal received during the first segment of the one reception signal. In addition, the other reception signal can be decoded using the one decoded reception signal. As described above, in the communication system of the present embodiment, even when the transmission device transmits the radio signal via the plurality of propagation paths having different path lengths, the reception device can receive the radio signal. Therefore, the communication system of the present embodiment can improve the reception gain of the reception device so as to further suppress the deterioration in the reception error rate characteristics.

In the embodiment of the present disclosure, a ground station (also referred to as a ground base station) refers to a base station (including a relay station.) installed on the ground. The "ground" is a ground in a broad sense including not only land but also underground, on water, and underwater. In the following description, the term "ground station" may be replaced with "gateway".

The outline of the present embodiment has been described above, and the communication system according to the present embodiment will be described in detail below.

The outline of the present embodiment has been described above, and the communication system according to the present embodiment will be described in detail below. Note that a case where the communication system is a non-terrestrial network will be described below, but the communication system to which the technology according to the present embodiment can be applied is not limited to the non-terrestrial network. The technology according to the present embodiment can be applied to a communication system that transmits a signal via a plurality of paths having a large propagation distance difference.

### <<2. Configuration of communication system>>

First, a configuration of a communication system 1 of the present embodiment will be described.

The communication system 1 is a cellular communication system using a radio access technology such as the LTE or NR. In cellular mobile communication, the base station device (e.g., eNodeB (eNB), gNodeB (gNB), and RAN node (including EUTRAN and NGRAN)) or a relay device installed on a ground configures a cell (macro cell, micro cell, femto cell, or small cell) to configure a wireless network. Hereinafter, the base station device or the relay device installed on the ground is also referred to as a ground station device (or ground station). The wireless network provided by the ground station device is referred to as a terrestrial network.

On the other hand, in view of a demand for cost reduction of the base station device and a coverage to an area where radio waves are difficult to reach from the base station device, provision of the wireless network from other than the ground station device has been studied. Examples of a device other than the ground station device include a satellite station (satellite base station device, satellite relay station device, and space station) that orbits the earth, and a device that floats in the air such as an aerial vehicle and a drone. Hereinafter, these devices other than the ground station device are also referred to as a non-ground station device (or non-ground station). A wireless network provided by these devices other than the ground station is referred to as a non-terrestrial network (NTN).

When the non-ground station is the satellite station, the communication system 1 may be a bent-pipe (transparent) type mobile satellite communication system. Note that the radio access system used by the communication system 1 is not limited to the LTE and NR, and may be other radio access systems such as wideband code division multiple access (W-CDMA) or code division multiple access 2000 (cdma2000).

In the present embodiment, the ground station refers to the base station installed on the ground (including relay station). Here, the "ground" is a ground in a broad sense including not only land but also underground, on water, and underwater. Note that, in the following description, the "ground station" may be replaced with a "gateway".

Furthermore, the technology of the present disclosure is applicable not only to communication between the non-ground base station and the terminal device but also to communication between the ground base station and the terminal device.

Hereinafter, a configuration of the communication system 1 will be specifically described.

### <2.1. Overall configuration of communication system>

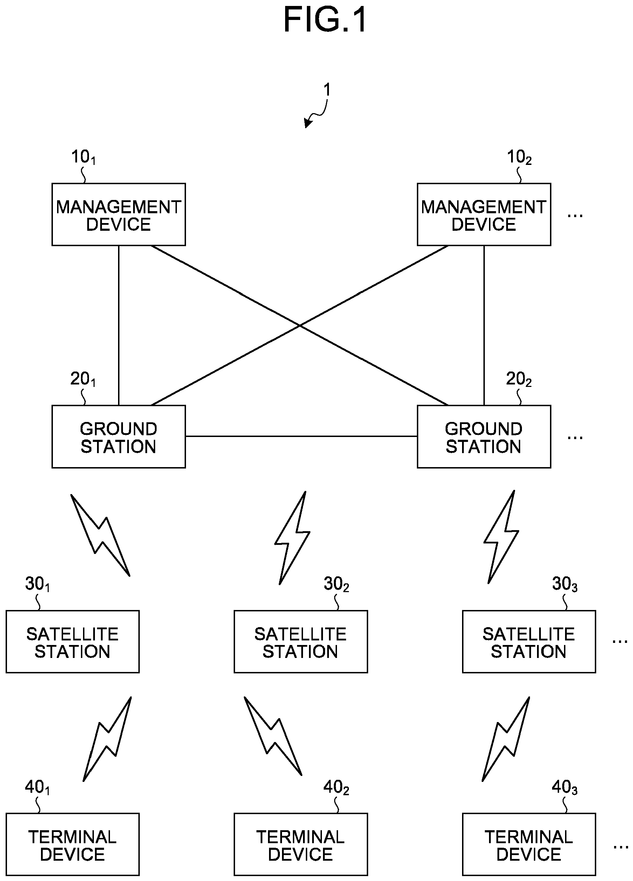

FIG. 1 is a diagram illustrating a configuration example of the communication system 1 according to the embodiment of the present disclosure. The communication system 1 includes a management device 10, a ground station 20, a satellite station 30, and a terminal device 40. The communication system 1 provides a user with a wireless network capable of mobile communication by coordinated operation of wireless communication apparatuses configuring the communication system 1. The wireless network of the present embodiment includes, for example, a radio access network and a core network. Note that, in the present embodiment, the wireless communication apparatus is a device having a function of wireless communication, and corresponds to the ground station 20, the satellite station 30, and the terminal device 40 in the example in FIG. 1.

The communication system 1 may include a plurality of management devices 10, a plurality of ground stations 20, a plurality of satellite stations 30, and a plurality of terminal devices 40. In the example in FIG. 1, the communication system 1 includes management devices 10₁, 10₂, and the like as the management device 10, ground stations 20₁, 20₂, and the like as the ground station 20. Further, the communication system 1 includes satellite stations 30₁, 30₂, and the like as the satellite station 30, and terminal devices 40₁, 40₂, and 40₃, and the like as the terminal device 40.

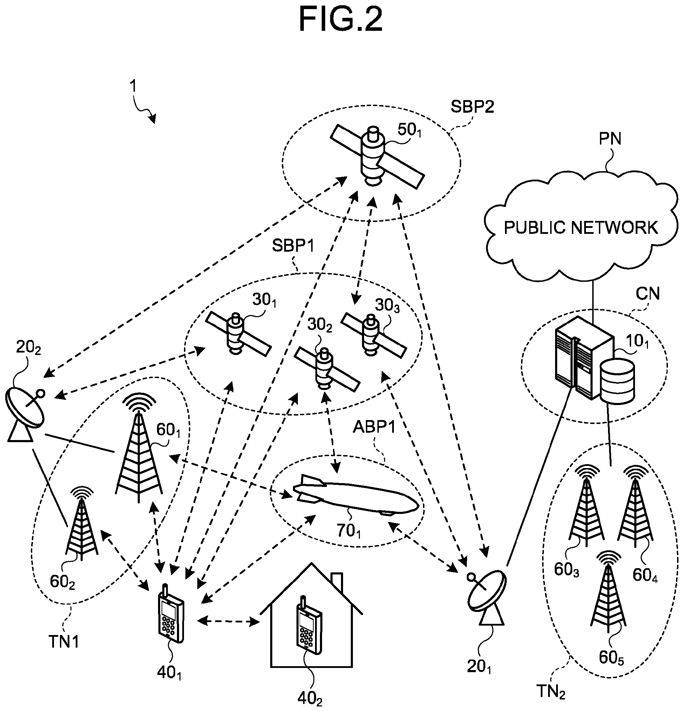

FIG. 2 is a diagram illustrating an example of the wireless network provided by the communication system 1. The ground station 20 (satellite station 30) and a base station 60 configure a cell. The cell is an area covered by the wireless communication. The cell may be any of a macro cell, a micro cell, a femto cell, or a small cell. Note that the communication system 1 may be configured to manage a plurality of cells by a single base station (satellite station), or may be configured to manage one cell by a plurality of base stations.

In the example in FIG. 2, base stations 60₁ and 60₂ configure a terrestrial network TN1, and base stations 60₃, 60₄, and 60₅ configure a terrestrial network TN2. The terrestrial network TN1 and the terrestrial network TN2 are, for example, networks operated by a wireless communication carrier such as a telephone company. The terrestrial network TN1 and the terrestrial network TN2 may be operated by different wireless communication carriers, or may be operated by the same wireless communication carrier. The terrestrial network TN1 and the terrestrial network TN2 may also be regarded as one terrestrial network.

Each of the terrestrial network TN1 and the terrestrial network TN2 is connected to the core network. In the example in FIG. 2, the base station 60 configuring the terrestrial network TN2 is connected to, for example, a core network CN configured by the management device 10₁. When the radio access system of the terrestrial network TN2 is the LTE, the core network CN is EPC. When the radio access system of the terrestrial network TN2 is the NR, the core network CN is 5GC. Naturally, the core network CN is not limited to the EPC or the 5GC, and may be a core network of another radio access system. In the example in FIG. 2, the terrestrial network TN1 is not connected to the core network, but the terrestrial network TN1 may be connected to the core network CN. Furthermore, the terrestrial network TN1 may be connected to a core network (not illustrated) different from the core network CN.

The core network CN includes a gateway device and a gate exchange, and is connected to a public network PN via the gateway device. The public network PN is, for example, a public data network such as the Internet, a regional IP network, or a telephone network (mobile telephone network, fixed telephone network, etc.). The gateway device is, for example, a server device connected to the Internet or the regional IP network. The gateway exchange is, for example, an exchange connected to a telephone network of a telephone company. The management device 10₁ may have a function as the gateway device or the gate exchange.

Each of the satellite stations 30 and 50 and an aircraft station 70 illustrated in FIG. 2 is the non-ground station such as the satellite station or the aircraft station. A satellite station group (or satellite station) configuring the non-terrestrial network is referred to as a spaceborne platform. In addition, an aircraft station group (or aircraft station) configuring the non-terrestrial network is referred to as an airborne platform. In the example in FIG. 2, the satellite stations 30₁, 30₂, and 30₃ configure a spaceborne platform SBP1, and the satellite station 50₁ configures a spaceborne platform SBP2. In addition, the aircraft station 70₃ configures an airborne platform ABP1.

The terminal device 40 can communicate with both the ground station and the non-ground station. In the example in FIG. 2, the terminal device 40₁ can communicate with the ground station configuring the terrestrial network TN1. In addition, the terminal device 40₁ can communicate with the non-ground stations configuring the spaceborne platforms SBP1 and SBP2. Further, the terminal device 40₁ can also communicate with the non-ground station configuring the airborne platform ABP1. Note that the terminal device 40₁ may be able to directly communicate with another terminal device 40 (terminal device 40₂ of the example in FIG. 2).

The non-ground station such as the satellite station 30 may be connectable to the terrestrial network or the core network via the relay station. The non-ground stations can directly communicate with each other without interposing the relay station.

The relay station is, for example, an aircraft station or an earth station. The aircraft station is a radio station installed on the ground or a mobile body traveling on the ground in order to communicate with the aircraft station. Furthermore, the earth station is a radio station located on the earth (including air) in order to communicate with the satellite station (space station). The earth station may be a large earth station or a small earth station such as a very small aperture terminal (VSAT). Note that the earth station may be a VSAT controlled earth station (also referred to as a master station or a HUB station) or a VSAT earth station (also referred to as a slave station). Furthermore, the earth station may be a radio station installed in the mobile body moving on the ground. For example, as the earth station mounted on ship, there is an earth station on board vessels (ESV). Furthermore, the earth station may include an aircraft earth station that is installed in an aircraft (including a helicopter) and communicates with the satellite station. Furthermore, the earth station may include an aircraft earth station that is installed in the mobile body moving on the ground and communicates with the aircraft earth station via the satellite station. Note that the relay station may be a portable movable radio station that communicates with the satellite station or the aircraft station. The relay station can be regarded as a part of the communication system 1.

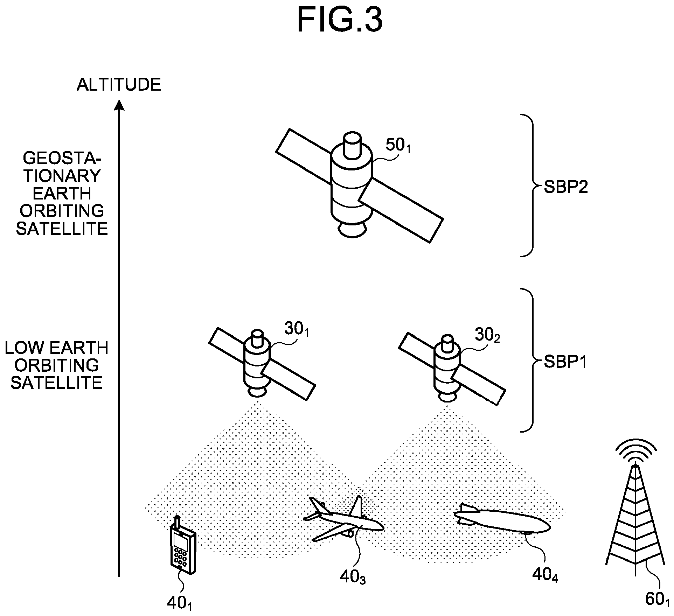

Each device configuring the spaceborne platforms SBP1 and SBP2 performs satellite communication with the terminal device 40. The satellite communication is wireless communication between the satellite station and the communication apparatus. FIG. 3 is a diagram illustrating an outline of the satellite communication provided by the communication system 1. The satellite station is mainly divided into a geostationary earth orbiting satellite station and a low earth orbiting satellite station.

The geostationary earth orbiting satellite station is located at an altitude of approximately 35786 km and orbits the earth at the same speed as a rotation speed of the earth. In the example in FIG. 3, the satellite station 50₁ configuring the spaceborne platform SBP2 is the geostationary earth orbiting satellite station. The geostationary earth orbiting satellite station has almost zero relative velocity with the terminal device 40 on the ground, and is observed as if he geostationary satellite is still from the terminal device 40 on the ground. The satellite station 50₁ performs the satellite communication with the terminal devices 40₁, 40₃, 40₄, and the like located on the earth.

The low earth orbiting satellite station is a satellite station that orbits at a lower altitude than the geostationary earth orbiting satellite station or a medium earth orbiting satellite station. The low earth orbiting satellite station is, for example, a satellite station located at an altitude from 500 km to 2000 km. In the example in FIG. 3, the satellite stations 30₂ and 30₃ configuring the spaceborne platform SBP1 are low earth orbiting satellite stations. Note that FIG. 3 illustrates only two satellite stations, namely, the satellite station 30₂ and the satellite station 30₃, as the satellite stations configuring the spaceborne platform SBP1. However, the spaceborne platform SBP1 is actually configured with two or more (e.g., several tens to several thousands) of satellite stations 30 forming a low earth orbiting satellite constellation. Unlike the geostationary earth orbiting satellite station, the low earth orbiting satellite station has a relative velocity with the terminal device 40 on the ground, and is observed as if the low-orbit satellite station is moving from the terminal device 40 on the ground. The satellite stations 30₂ and 30₃ configure respective cells, and perform the satellite communication with terminal devices 40₁, 40₃, 40₄, and the like located on the earth.

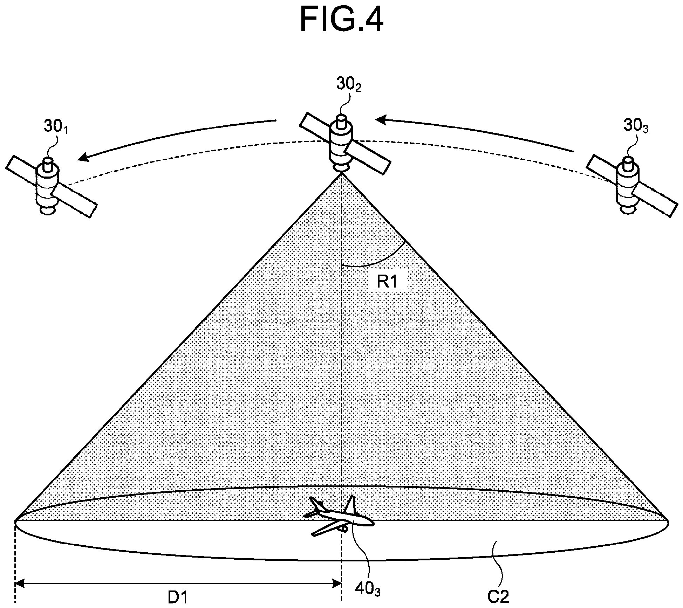

FIG. 4 is a diagram illustrating an example of a cell configured with a non-geostationary satellite. FIG. 4 illustrates a cell C2 formed by the satellite station 30₂ that is the low earth orbiting satellite station. The satellite station performing low earth orbiting communicates with the terminal device 40 on the ground with a predetermined directivity on the ground. For example, an angle R1 illustrated in FIG. 4 is 40°. In the case of FIG. 4, a radius D1 of the cell C2 formed by the satellite station 30₂ is, for example, 1000 km. The low earth orbiting satellite station moves at a constant velocity. When it becomes difficult for the low earth orbiting satellite station to provide the satellite communication to the terminal device 40 on the ground, a neighbor satellite station provides the satellite communication. In the case of the example in FIG. 4, when it is difficult for the satellite station 30₂ to provide the satellite communication to the terminal device 40 on the ground, the neighbor satellite station 30₃ provides the satellite communication. Note that values of the angle R1 and the radius D1 described above are merely examples and are not limited to the above.

As described above, the medium earth orbiting satellite and the low earth orbiting satellite move on the orbit at a very high speed in the sky, and when the low-orbit satellite is located, for example, at an altitude of 600 km, the low-orbit satellite moves on the orbit at a speed of 7.6 km/S. The low earth orbiting satellite forms a cell (or beam) having a radius of several 10 km to several 100 km on the ground, but since the cell formed on the ground also moves in accordance with movement of the satellite, handover may be required even when the terminal device does not move on the ground. For example, assuming a case where a diameter of the cell formed on the ground is 50 km and the terminal device on the ground is not moving, the handover occurs in about 6 to 7 seconds.

As described above, the terminal device 40 can perform the wireless communication using the non-terrestrial network. Furthermore, the satellite station 30 of the communication system 1 configures the non-terrestrial network. As a result, the communication system 1 can extend a service to the terminal device 40 located in an area that cannot be covered by the terrestrial network. For example, the communication system 1 can provide public safety communication and critical communication to a communication apparatus such as an IoT device or a machine type communications (MTC) device. In addition, since service reliability and recoverability are improved by using the non-terrestrial network, the communication system 1 can reduce vulnerability of the service to physical attacks or natural disasters. In addition, the communication system 1 can realize service connection to aircraft terminal devices such as airplane passengers and drones, and service connection to mobile terminal devices such as ships and trains. In addition, the communication system 1 can provide A/V content, group communication, an IoT broadcast service, a software download service, a high-efficiency multicast service such as an emergency message, a high-efficiency broadcast service, and the like. Furthermore, the communication system 1 can also realize traffic offloading between the terrestrial network and the non-terrestrial network. In order to realize these, it is desirable that the non-terrestrial network provided by the communication system 1 is subjected to operation integration with the terrestrial network provided by the communication system 1 in an upper layer. In addition, the non-terrestrial network provided by the communication system 1 desirably has the radio access system common to that of the terrestrial network provided by the communication system 1.

Note that devices in the drawings may be considered as devices in a logical sense. In other words, a part of the devices in the drawing may be realized by a virtual machine (VM), a container, a docker, or the like, and they may be implemented on physically the same hardware.

In addition, in the present embodiment, the ground station can be rephrased as the base station. The satellite station can be rephrased as the relay station. When the satellite station has a function as the base station, the satellite station can be rephrased as the base station.

Note that an LTE base station may be referred to as an evolved node B (eNodeB) or an eNB. Further, an NR base station may be referred to as a gNodeB or a gNB. In the LTE and NR, the terminal device (also referred to as a mobile station or a terminal) may be referred to as user equipment (UE). Note that the terminal device is a type of communication apparatus, and is also referred to as a mobile station or a terminal.

In the present embodiment, the concept of the communication apparatus includes not only a portable mobile device (terminal device) such as a mobile terminal but also a device installed in a structure or a mobile body. The structure or the mobile body itself may be regarded as the communication apparatus. Further, the concept of the communication apparatus includes not only the terminal device but also the base station and the relay device. The communication apparatus is one type of processor and information processor. Furthermore, the communication apparatus can be rephrased as a transmission device or a reception device.

Hereinafter, a configuration of each device configuring the communication system 1 will be specifically described. Note that the configuration of each device described below is merely an example. The configuration of each device may be different from the following configuration.

### <2.2. Configuration of management device>

Next, a configuration of the management device 10 will be described.

The management device 10 manages the wireless network. For example, the management device 10 is a device that manages communication of the ground station 20. When the core network is the EPC, the management device 10 is, for example, a device having a function as a mobility management entity (MME). Furthermore, when the core network is the 5GC, the management device 10 is, for example, a device having a function as an access and mobility management function (AMF) or a session management function (SMF). Naturally, functions of the management device 10 are not limited to the MME, the AMF, and the SMF. For example, when the core network is the 5GC, the management device 10 may be a device having a function as a network slice selection function (NSSF), an authentication server function (AUSF), or a unified data management (UDM). Furthermore, the management device 10 may be a device having a function as a home subscriber server (HSS).

Note that the management device 10 may have a function of the gateway. For example, when the core network is the EPC, the management device 10 may have a function as a serving gateway (S-GW) or a packet data network gateway (P-GW). In addition, when the core network is the 5GC, the management device 10 may have a function as a user plane function (UPF). Note that the management device 10 is not necessarily a device configuring the core network. For example, it is assumed that the core network is a wideband code division multiple access (W-CDMA) or code division multiple access 2000 (cdma2000) core network. In this case, the management device 10 may be a device that functions as a radio network controller (RNC).

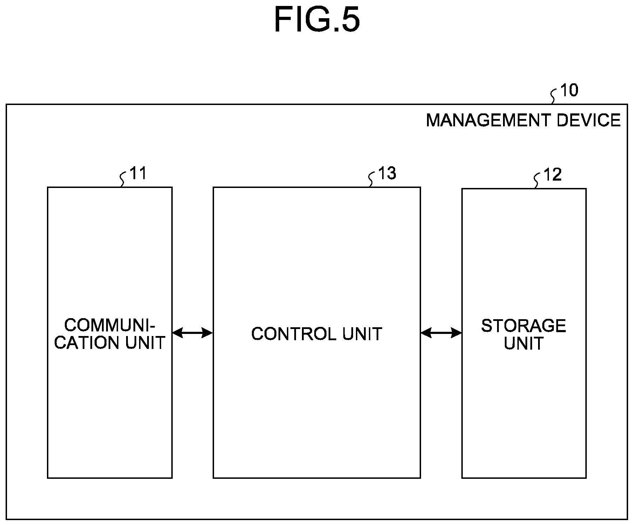

FIG. 5 is a diagram illustrating a configuration example of the management device 10 according to the embodiment of the present disclosure. The management device 10 includes a communication unit 11, a storage unit 12, and a control unit 13. Note that the configuration illustrated in FIG. 5 is a functional configuration, and a hardware configuration may be different from the functional configuration. Furthermore, functions of the management device 10 may be implemented in a distributed manner in a plurality of physically separated structures. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a universal serial bus (USB) interface including a USB host controller and a USB port. Furthermore, the communication unit 11 may be a wired interface or a wireless interface. The communication unit 11 functions as a communication means of the management device 10. The communication unit 11 communicates with the ground station 20 and the like under the control of the control unit 13.

The storage unit 12 is a data readable/writable storage device such as a dynamic random access memory (DRAM), a static random access memory (SRAM), a flash memory, or a hard disk. The storage unit 12 functions as a storage means of the management device 10. The storage unit 12 stores, for example, a connection state of the terminal device 40. For example, the storage unit 12 stores an RRC state and an ECM state of the terminal device 40. The storage unit 12 may function as a home memory that stores position information of the terminal device 40.

The control unit 13 is a controller that controls each part of the management device 10. The control unit 13 is realized by, for example, a processor such as a central processing unit (CPU) or a micro processing unit (MPU). For example, the control unit 13 is implemented by a processor executing various programs stored in the storage device inside the management device 10 using a random access memory (RAM) or the like as a work area. Note that the control unit 13 may be realized by an integrated circuit such as an application specific integrated circuit (ASIC) or a field programmable gate array (FPGA). Any of the CPU, the MPU, the ASIC, and the FPGA can be regarded as the controller.

### <2.3. Configuration of ground station>

Next, a configuration of the ground station 20 will be described.

The ground station 20 is a wireless communication apparatus that wirelessly communicates with the terminal device 40 via the satellite station 30. Note that the ground station 20 may be configured to communicate with the terminal device 40 without passing through the satellite station 30.

The ground station 20 is one type of communication apparatus. The ground station 20 is, for example, a device corresponding to a wireless base station (e.g., base station, Node B, eNB, and gNB) or a radio access point. The ground station 20 may be a wireless relay station. Further, the ground station 20 may be an optical extended device called a remote radio head (RRH). Furthermore, the ground station 20 may be a receiving station such as a field pickup unit (FPU). Furthermore, the ground station 20 may be an integrated access and backhaul (IAB) donor node or an IAB relay node that provides a radio access line and a radio backhaul line by time division multiplexing, frequency division multiplexing, or space division multiplexing.

Note that the radio access technology used by the ground station 20 may be a cellular communication technology or a wireless LAN technology. Obviously, the radio access technology used by the ground station 20 is not limited thereto, and may be other radio access technologies. For example, the radio access technology used by the ground station 20 may be an LPWA communication technology. In addition, the wireless communication used by the ground station 20 may be wireless communication using millimeter waves. Furthermore, the wireless communication used by the ground station 20 may be wireless communication using radio waves or wireless communication (optical) using infrared rays or visible light.

The ground station 20 may be capable of non-orthogonal multiple access (NOMA) communication with the terminal device 40. Here, the NOMA communication is communication using a non-orthogonal resource (transmission, reception, or both). Note that the ground station 20 may be capable of the NOMA communication with another ground station 20.

Note that the ground station 20 may be capable of communicating with each other via a base station-core network interface (e.g., S1 interface). This interface may be either wired or wireless. Furthermore, the base stations may be capable of communicating with each other via an inter-base station interface (e.g., X2 interface and S1 interface). This interface may be either wired or wireless.

Note that the concept of the base station (also referred to as the base station) includes not only a donor base station but also a relay base station (also referred to as the relay station). In addition, the concept of the base station includes not only a structure having a function of the base station but also an apparatus installed in the structure.

The structure is, for example, a building such as a high-rise building, a house, a steel tower, a station facility, an airport facility, a harbor facility, or a stadium. Note that the concept of the structure includes not only a building but also a non-building structure such as a tunnel, a bridge, a dam, a wall, or an iron pillar, and equipment such as a crane, a gate, or a windmill. In addition, the concept of the structure includes not only a structure on land (on the ground in a narrow sense) or underground, but also a structure on water such as a platform or a megafloat, and a structure under water such as a marine observation facility. The base station can be rephrased as an information processor.

The ground station 20 may be a donor station or the relay station. Furthermore, the ground station 20 may be a fixed station or a mobile station. The mobile station is a wireless communication apparatus (e.g., base station) configured to be movable. In this case, the ground station 20 may be a device installed in the mobile body or may be the mobile body itself. For example, the relay station having mobility can be regarded as the ground station 20 as the mobile station. In addition, a device that originally has the mobility, such as a vehicle, a drone, or a smartphone, and has a function of the base station (at least a part of the function of the base station) is also the ground station 20 as the mobile station.

Here, the mobile body may be a mobile terminal such as a smartphone or a mobile phone. In addition, the mobile body may be a mobile body that travels on land (ground in a narrow sense) (e.g., vehicle including an automobile, a bicycle, a bus, a truck, a motorcycle, a train, and a linear motor car) or a mobile body that travels underground (e.g., inside tunnel) (e.g., subway).

In addition, the mobile body may be a mobile body that travels on water (e.g., ship such as a passenger ship, a cargo ship, or a hovercraft) or a mobile body that moves under water (e.g., submersibles such as a submersible vessel, a submarine, and an unmanned submarine).

Note that the mobile body may be a mobile body (e.g., an aircraft such as an airplane, an airship, or a drone) that moves in the atmosphere.

Furthermore, the ground station 20 may be a ground base station (ground station) installed on the ground. For example, the ground station 20 may be a base station installed in a structure on the ground, or may be a base station installed in a mobile body moving on the ground. More specifically, the ground station 20 may be an antenna installed in a structure such as a building and a signal processing device connected to the antenna. Obviously, the ground station 20 may be a structure or a mobile body itself. The "ground" in a broad sense includes not only land (ground in a narrow sense) but also underground, on water, and under water. Note that the ground station 20 is not limited to the ground base station. For example, the ground station 20 may be the aircraft station. From a viewpoint of the satellite station 30, the aircraft station located on the earth can also be regarded as the ground station.

The aircraft station is a wireless communication apparatus capable of floating in the atmosphere, such as an aircraft. The aircraft station may be a device mounted on an aircraft or the like, or may be the aircraft itself. Note that the concept of the aircraft includes not only a heavy aircraft such as an airplane and a glider but also a light aircraft such as a balloon and an airship. In addition, the concept of the aircraft includes not only heavy and light aircrafts but also a rotorcraft such as a helicopter and an autogyroscope. Note that the aircraft station (or the aircraft on which an aircraft station is mounted) may be an unmanned aerial vehicle such as a drone.

Note that the concept of the unmanned aerial vehicle also includes an unmanned aircraft system (UAS) and a tethered UAS. The concept of the unmanned aerial vehicle also includes lighter than air (LTA) UAS and heavier than air (HTA) UAS. Furthermore, the concept of unmanned aerial vehicles also includes high altitude UAS platforms (HAPs).

A magnitude of coverage of the ground station 20 may be large such as a macro cell to small such as a pico cell. It is apparent that the magnitude of coverage of the ground station 20 may be extremely small such as a femto cell. Further, the ground station 20 may have a beamforming capability. In this case, the ground station 20 may form a cell or a service area for each beam.

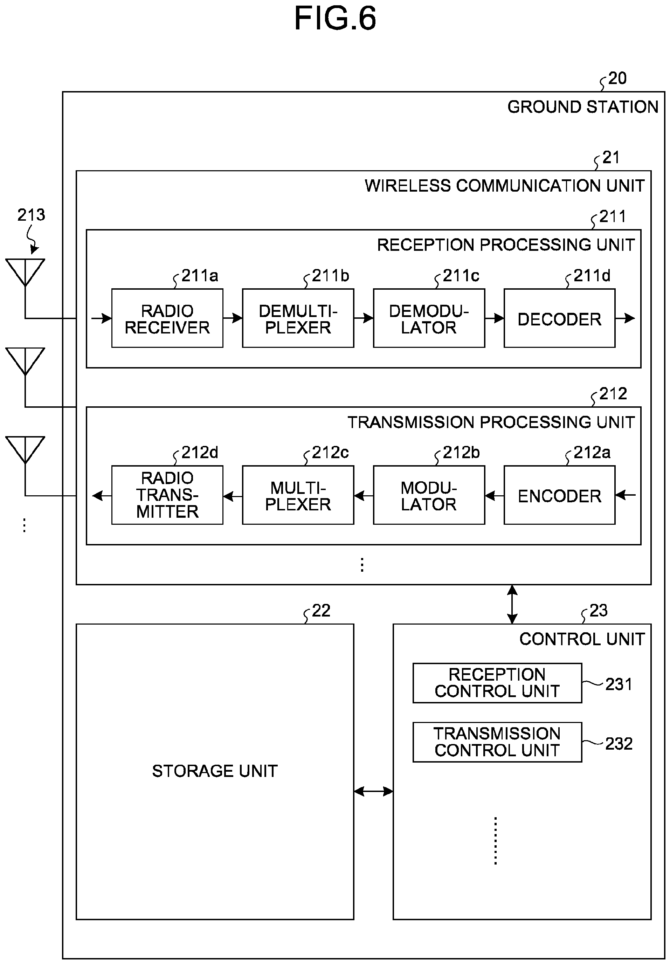

FIG. 6 is a diagram illustrating a configuration example of the ground station 20 according to the embodiment of the present disclosure. The ground station 20 includes a wireless communication unit 21, a storage unit 22, and a control unit 23. Note that the configuration illustrated in FIG. 6 is a functional configuration, and a hardware configuration may be different from the functional configuration. Furthermore, functions of the ground station 20 may be implemented in a distributed manner in a plurality of physically separated configurations.

The wireless communication unit 21 is a signal processing unit for wirelessly communicating with other wireless communication apparatus (e.g., terminal device 40). The wireless communication unit 21 operates under the control of the control unit 23. The wireless communication unit 21 corresponds to one or a plurality of radio access systems. For example, the wireless communication unit 21 supports both NR and LTE. The wireless communication unit 21 may be compatible with W-CDMA or cdma2000 in addition to the NR or LTE. Furthermore, the wireless communication unit 21 may support an automatic retransmission technology such as hybrid automatic repeat request (HARQ).

The wireless communication unit 21 includes a reception processing unit 211, a transmission processing unit 212, and an antenna 213. The wireless communication unit 21 may include a plurality of reception processing units 211, a plurality of transmission processing units 212, and a plurality of antennas 213. When the wireless communication unit 21 supports a plurality of radio access systems, each part of the wireless communication unit 21 can be configured individually for each of the radio access systems. For example, the reception processing unit 211 and the transmission processing unit 212 may be individually configured for the LTE and the NR. Furthermore, the antenna 213 may include a plurality of antenna elements (e.g., a plurality of patch antennas). In this case, the wireless communication unit 21 may be configured to be beamformable. The wireless communication unit 21 may be configured to be able to perform polarization beamforming using vertically polarized waves (V-polarized waves) and horizontally polarized waves (H-polarized waves).

The reception processing unit 211 processes an uplink signal received via the antenna 213. The reception processing unit 211 performs, with respect to the uplink signal, down-conversion, removal of an unnecessary frequency component, control of an amplification level, quadrature demodulation, conversion into a digital signal, removal of a guard interval (cyclic prefix), extraction of a frequency domain signal by fast Fourier transform, and the like. In this case, the reception processing unit 211 separates an uplink channel, such as a physical uplink shared channel (PUSCH) and a physical uplink control channel (PUCCH), and an uplink reference signal from a signal after the above processing is performed. The reception processing unit 211 demodulates a reception signal using a modulation scheme such as binary phase shift keying (BPSK) or quadrature phase shift keying (QPSK) with respect to a modulation symbol of the uplink channel. The modulation scheme used for demodulation may be 16-quadrature amplitude modulation (16QAM), 64QAM, or 256QAM. In this case, signal points on constellation do not necessarily have to be equidistant. The constellation may be a non-uniform constellation (NUC). The reception processing unit 211 decodes encoded bits of a demodulated uplink channel. Decoded uplink data and uplink control information are output to the control unit 23.

The transmission processing unit 212 performs transmission processing of downlink control information and downlink data. The transmission processing unit 212 encodes the downlink control information and the downlink data input from the control unit 23 using an encoding system such as block encoding, convolutional encoding, or turbo encoding. Then, the transmission processing unit 212 modulates coded bits by a predetermined modulation scheme such as BPSK, QPSK, 16QAM, 64QAM, or 256QAM. In this case, signal points on constellation do not necessarily have to be equidistant. The constellation may be a non-uniform constellation. The transmission processing unit 212 multiplexes a modulation symbol of each channel and a downlink reference signal, and arranges a multiplexed result in a predetermined resource element. Then, the transmission processing unit 212 performs various types of signal processing on the multiplexed signal under the control of the control unit 23. For example, the transmission processing unit 212 performs processing such as conversion into a frequency domain by fast Fourier transform, addition of cyclic prefix (guard interval), generation of a baseband digital signal, conversion into an analog signal, quadrature modulation, up-conversion, removal of an extra frequency component, and power amplification. A signal generated by the transmission processing unit 212 is transmitted from the antenna 213.

The antenna 213 is an antenna device (antenna unit) that mutually converts a current and a radio wave. The antenna 213 may include one antenna element (e.g., one patch antenna) or may include a plurality of antenna elements (e.g., a plurality of patch antennas). In a case where the antenna 213 includes a plurality of antenna elements, the wireless communication unit 21 may be configured to be beamformable. For example, the wireless communication unit 21 may be configured to generate a directional beam by controlling the directivity of a radio signal using the plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) to transmit radio signals. Then, the wireless communication unit 21 may control directivity of the radio signal transmitted using the vertically polarized wave and the horizontally polarized wave.

The storage unit 22 is a storage device capable of reading and writing data, such as a DRAM, an SRAM, a flash memory, or a hard disk. The storage unit 22 functions as a storage means of the ground station 20.

The control unit 23 is a controller that controls each part of the ground station 20. The control unit 23 is realized by, for example, a processor such as a central processing unit (CPU) or a micro processing unit (MPU). For example, the control unit 23 is implemented by a processor executing various programs stored in the storage device inside the ground station 20 using the random access memory (RAM) or the like as a work area. Note that the control unit 23 may be realized by an integrated circuit such as an application specific integrated circuit (ASIC) or a field programmable gate array (FPGA). Any of the CPU, the MPU, the ASIC, and the FPGA can be regarded as the controller.

The control unit 23 includes a reception control unit 231 and a transmission control unit 232. Each block (reception control unit 231 and transmission control unit 232) configuring the control unit 23 is a functional block indicating each function of the control unit 23. These functional blocks may be software blocks or hardware blocks. For example, each of the functional blocks described above may be one software module realized by software (including microprogram), or may be one circuit block on a semiconductor chip (die). It is apparent that each functional block may be one processor or one integrated circuit. Note that the control unit 23 may be configured by a functional unit different from the above-described functional blocks. A configuration method of the functional blocks is arbitrary.

### <2-4. Configuration of satellite station>

Next, a configuration of the satellite station 30 will be described.

The satellite station 30 is a relay station that relays communication between the ground station 20 and the terminal device 40. Note that the satellite station 30 may be a base station that provides the terminal device 40 with a function of the base station.

The satellite station 30 is the wireless communication apparatus capable of floating outside the atmosphere. The satellite station 30 may be a device mounted on a space mobile body such as an artificial satellite, or may be the space mobile body itself. The space mobile body is a mobile body that moves outside the atmosphere. Examples of the space mobile body include artificial bodies such as an artificial satellite, spacecraft, space station, and probe.

A satellite serving as the satellite station 30 may be any of a low earth orbiting (LEO) satellite, a medium earth orbiting (MEO) satellite, a geostationary earth orbiting (GEO) satellite, and a highly elliptical orbiting (HEO) satellite. Obviously, the satellite station may be a device mounted on the LEO satellite, the MEO satellite, the GEO satellite, or the HEO satellite.

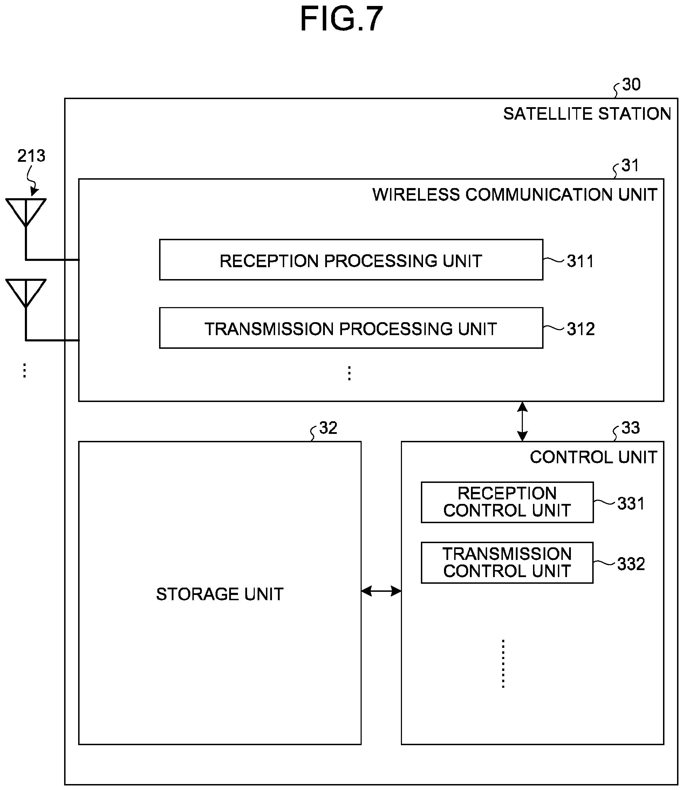

FIG. 7 is a diagram illustrating a configuration example of the satellite station 30 according to the embodiment of the present disclosure. The satellite station 30 includes a wireless communication unit 31, a storage unit 32, and a control unit 33. Note that the configuration illustrated in FIG. 7 is a functional configuration, and a hardware configuration may be different from the functional configuration. Furthermore, functions of the satellite station 30 may be implemented in a distributed manner in a plurality of physically separated configurations.

The wireless communication unit 31 is a wireless communication interface that wirelessly communicates with other wireless communication apparatuses (e.g., ground station 20, terminal device 40, satellite station 50, and another satellite station 30). The wireless communication unit 31 supports one or a plurality of radio access systems. For example, the wireless communication unit 31 supports both NR and LTE. The wireless communication unit 31 may be compatible with the W-CDMA or cdma3000 in addition to the NR or LTE. The wireless communication unit 31 includes a reception processing unit 311, a transmission processing unit 312, and an antenna 313. The wireless communication unit 31 may include a plurality of reception processing units 311, a plurality of transmission processing units 312, and a plurality of antennas 313. When the wireless communication unit 31 supports a plurality of radio access systems, each part of the wireless communication unit 31 can be configured individually for each radio access system. For example, the reception processing unit 311 and the transmission processing unit 312 may be individually configured for the LTE and the NR. Configurations of the reception processing unit 311, the transmission processing unit 312, and the antenna 313 are similar to the configurations of the reception processing unit 311, the transmission processing unit 312, and the antenna 313 described above. Note that the wireless communication unit 31 may be configured to be beamformable similarly to the wireless communication unit 21.

The storage unit 32 is a storage device capable of reading and writing data, such as the DRAM, the SRAM, the flash memory, or the hard disk. The storage unit 32 functions as a storage means of the satellite station 30.

The control unit 33 is a controller that controls each part of the satellite station 30. The control unit 33 is realized by, for example, a processor such as the CPU or the MPU. For example, the control unit 33 is realized by a processor executing various programs stored in the storage device inside the satellite station 30 using the RAM or the like as a work area. Note that the control unit 33 may be realized by an integrated circuit such as the ASIC or the FPGA. Any of the CPU, the MPU, the ASIC, and the FPGA can be regarded as the controller.

The control unit 33 includes a reception control unit 331 and a transmission control unit 332. Each block (reception control unit 331 and transmission control unit 332) configuring the control unit 33 is a functional block indicating each function of the control unit 33. These functional blocks may be software blocks or hardware blocks. For example, each of the functional blocks described above may be one software module realized by software (including microprogram), or may be one circuit block on a semiconductor chip (die). It is apparent that each functional block may be one processor or one integrated circuit. The control unit 33 may be configured by a functional unit different from the above-described functional blocks. A configuration method of the functional blocks is arbitrary.

### <2-5. Configuration of terminal device>

Next, a configuration of the terminal device 40 will be described.

The terminal device 40 is a wireless communication apparatus that wirelessly communicates with other communication apparatuses such as the ground station 20, the satellite stations 30 and 50, the base station 60, and the aircraft station 70. For example, the terminal device 40 may be a mobile phone, a smart device (smartphone or tablet), a personal digital assistant (PDA), or a personal computer. Furthermore, the terminal device 40 may be a device such as a business-use camera provided with a communication function, or may be a motorcycle, a moving relay vehicle, or the like on which a communication apparatus such as a field pickup unit (FPU) is mounted. Furthermore, the terminal device 40 may be a machine to machine (M2M) device or an Internet of things (IoT) device.

Note that the terminal device 40 may be capable of performing NOMA communication with the ground station 20. Furthermore, the terminal device 40 may be capable of using an automatic retransmission technology such as HARQ when communicating with the ground station 20. Further, the terminal device 40 may be capable of performing sidelink communication with another terminal device 40. The terminal device 40 may also be capable of using an automatic retransmission technology such as HARQ when performing the sidelink communication. Note that the terminal device 40 may also be capable of NOMA communication in communication (sidelink) with other terminal devices 40. Furthermore, the terminal device 40 may be capable of performing the LPWA communication with another communication apparatus (e.g., ground station 20 and other terminal devices 40). Furthermore, wireless communication used by the terminal device 40 may be wireless communication using millimeter waves. Note that the wireless communication (including sidelink communication) used by the terminal device 40 may be wireless communication using radio waves or wireless communication (optical) using infrared rays or visible light.

Furthermore, the terminal device 40 may be a mobile device. The mobile device is a mobile wireless communication apparatus. In this case, the terminal device 40 may be a wireless communication apparatus installed in a mobile body or may be the mobile body itself. For example, the terminal device 40 may be a vehicle that moves on a road, such as an automobile, a bus, a truck, and a motorcycle, or the wireless communication apparatus mounted on the vehicle. Note that the mobile body may be a mobile terminal, or may be the mobile body that travels on land (on the ground in a narrow sense), underground, on water, or under water. Furthermore, the mobile body may be a mobile body that travels in the atmosphere, such as a drone or a helicopter, or may be a mobile body that travels outside the atmosphere such as an artificial satellite.

The terminal device 40 may be simultaneously connected to a plurality of base stations or a plurality of cells to perform communication. For example, when one base station supports a communication area via a plurality of cells (e.g., pCell and sCell), it is possible to bundle the plurality of cells and communicate between the ground station 20 and the terminal device 40 by a carrier aggregation (CA) technology, a dual connectivity (DC) technology, or a multi-connectivity (MC) technology. Alternatively, the terminal device 40 and the plurality of ground stations 20 can communicate with each other by a coordinated multi-point transmission and reception (CoMP) technology via cells of different ground stations 20.

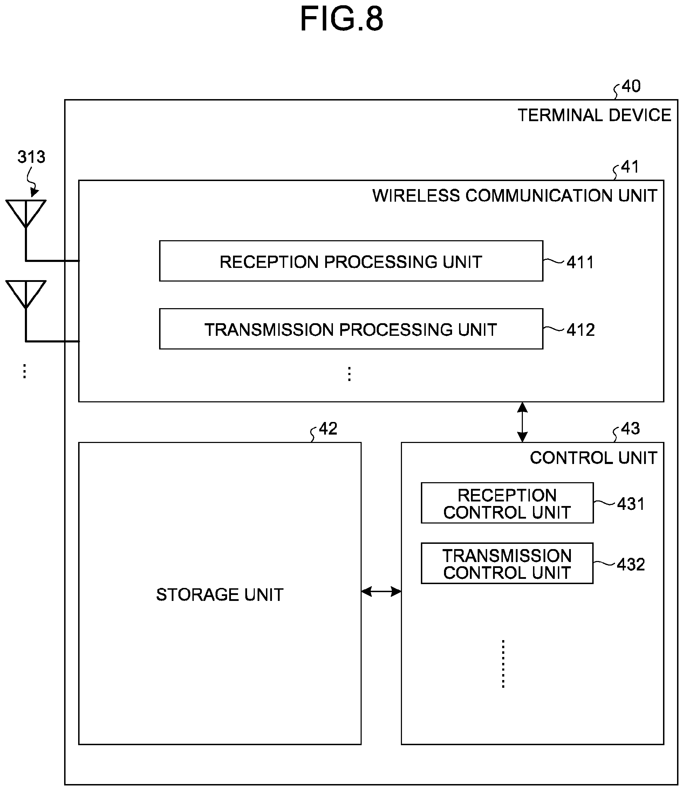

FIG. 8 is a diagram illustrating a configuration example of the terminal device 40 according to the embodiment of the present disclosure. The terminal device 40 includes a wireless communication unit 41, a storage unit 42, and a control unit 43. Note that the configuration illustrated in FIG. 8 is a functional configuration, and a hardware configuration may be different from the functional configuration. Furthermore, functions of the terminal device 40 may be implemented in a distributed manner in a plurality of physically separated configurations.

The wireless communication unit 41 is a signal processing unit for wirelessly communicating with other wireless communication apparatuses (e.g., ground station 20, and other terminal devices 40). The wireless communication unit 41 operates under the control of the control unit 43. The wireless communication unit 41 includes a reception processing unit 411, a transmission processing unit 412, and an antenna 413. Configurations of the wireless communication unit 41, the reception processing unit 411, the transmission processing unit 412, and the antenna 413 may be similar to those of the wireless communication unit 21, the transmission processing unit 212, the reception processing unit 211, and the antenna 213 of the ground station 20. Further, the wireless communication unit 41 may be configured to be beamformable similarly to the wireless communication unit 21.

The storage unit 42 is a storage device capable of reading and writing data, such as a DRAM, an SRAM, a flash memory, or a hard disk. The storage unit 42 functions as a storage means of the terminal device 40.

The control unit 43 is a controller that controls each part of the terminal device 40. The control unit 43 is realized by, for example, a processor such as the CPU or the MPU. For example, the control unit 43 is realized by a processor executing various programs stored in a storage device inside the terminal device 40 using the RAM or the like as a work area. Note that the control unit 43 may be realized by an integrated circuit such as the ASIC or the FPGA. Any of the CPU, the MPU, the ASIC, and the FPGA can be regarded as the controller.

The control unit 43 includes a reception control unit 431 and a transmission control unit 432. Each block (reception control unit 431 and transmission control unit 432) configuring the control unit 43 is a functional block indicating each function of the control unit 43. These functional blocks may be software blocks or hardware blocks. For example, each of the functional blocks described above may be one software module realized by software (including microprogram), or may be one circuit block on a semiconductor chip (die). It is apparent that each functional block may be one processor or one integrated circuit. Note that the control unit 43 may be configured by a functional unit different from the above-described functional blocks. A configuration method of the functional blocks is arbitrary.

### <<3. Transmission and reception diversity>>

The configuration of the communication system 1 has been described above. Next, for example, a problem in transmission and reception diversity using a plurality of satellite stations 30 will be described. When long-distance communication such as the above-described satellite communication is performed, a radio wave reception strength is a problem. In order to improve the radio wave reception strength, the use of antenna diversity is very effective.

As described above, when the ground station 20 or the terminal device 40 can simultaneously communicate with the plurality of satellite stations 30, it is considered that the communication system 1 can further improve the radio wave reception intensity by performing antenna diversity transmission and reception using the plurality of satellite stations 30. However, the antenna diversity transmission and reception using the plurality of satellite stations 30 has the following problems.

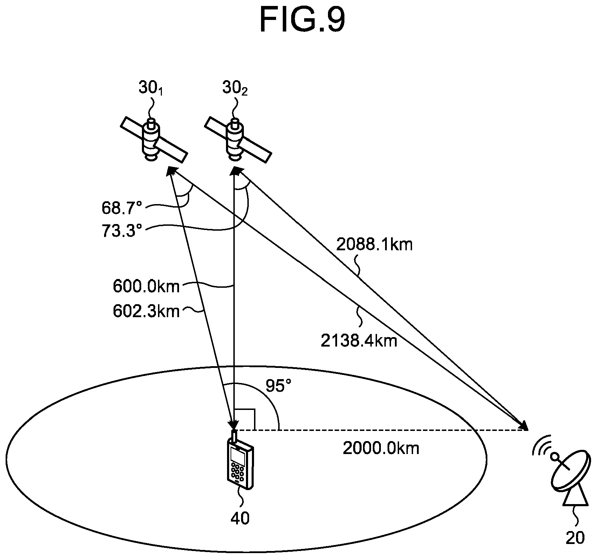

FIG. 9 is a diagram illustrating an example of the antenna diversity transmission and reception using the plurality of satellite stations 30. Here, a case where the antenna diversity transmission and reception using the plurality of satellite stations 30 is performed in Bent-pipe (Transparent) type satellite communication using the non-geostationary satellite will be described.

In this case, a radio wave transmitted by the ground station 20 that is the base station (hereinafter also simply referred to as a ground base station 20) is reflected by each of the plurality of satellite stations 30₁ and 30₂, and reaches the terminal device 40 on the ground (downlink communication). Similarly, a radio wave transmitted by the terminal device 40 is reflected by each of the plurality of satellite stations 30₁ and 30₂ and reaches the ground base station 20 (uplink communication). Although the uplink communication performed in the communication system 1 will be described below in order to simplify the description, the antenna diversity according to the present embodiment can be similarly applied to the downlink communication.

Here, in the example in FIG. 9, positional relationship among the ground base station 20, the satellite stations 30₁ and 30₂, and the terminal device 40 is assumed as follows. Note that the following numerical values are merely examples, and are not limited to these values.
- Distance A1 between the terminal device 40 and the satellite station 30₁ = 602.3 km
- Distance A2 between the terminal device 40 and the satellite station 30₂ = 600.0 km
- Distance B1 between the ground base station 20 and the satellite station 30₁ = 2138.4 km
- Distance B2 between the ground base station 20 and the satellite station 30₂ = 2088.1 km
- Distance C between the terminal device 40 and the ground base station 20 = 2000.0 km
- Elevation angle X1 between the terminal device 40 and the satellite station 30₁ = 95°
- Elevation angle X2 between the terminal device 40 and the satellite station 30₂ = 90°

In this case, the radio wave propagation distance of a first path L1 including the satellite station 30₁ (ground base station 20 - satellite station 30₁ - terminal device 40) is A1 + B1 = 602.3 + 2138.4 = 2740.7 km. The radio wave propagation distance of a second path L2 including the satellite station 30₂ (ground base station 20 - satellite station 30₂ - terminal device 40) is A2 + B2 = 600.0 + 2088.1 = 2688.1 km. Therefore, a radio wave propagation distance difference between the first path L1 and the second path L2 is about 52.6 km. This is a delay difference of about 0.17 ms when expressed as a radio wave propagation delay difference.

In other words, according to the condition assumed above, the data transmitted from the terminal device 40 using the first path L1 is received by the ground base station 20 about 0.17 ms after the data transmitted from the terminal device 40 using the second path L2 is received by the ground base station 20.

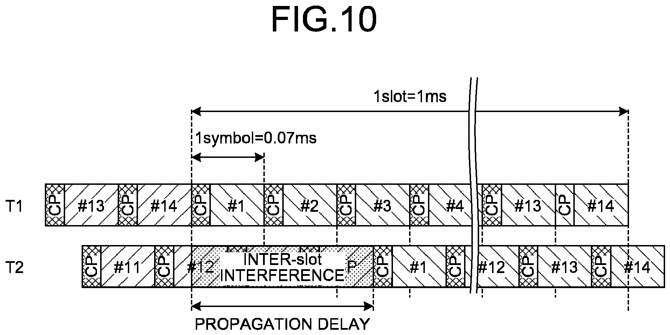

Next, an example of a physical layer frame structure used in NR communication will be described with reference to FIG. 10. FIG. 10 is a diagram illustrating the example of the physical layer frame structure.

As illustrated in FIG. 10, in the physical layer frame structure used in the NR communication, one slot is one ms, and one symbol is about 0.07 ms when a subcarrier interval is 15 kHz. In the example in FIG. 10, a one-slot signal includes symbols #1 to #14. A guard interval such as a cyclic prefix (CP) is provided at a head of each of symbols #1 to #14. Note that although FIG. 10 illustrates an example in which the cyclic prefix is provided at the head of the symbol, the cyclic prefix may be provided at a tail of the symbol.

Here, it is assumed that a signal having the above frame structure reaches the ground base station 20 via the first path L1 and the second path L2. As described above, the radio wave propagation delay difference between the first path L1 and the second path L2 is about 0.17 ms. When this is expressed by symbols in the physical layer frame structure in FIG. 10, the radio wave propagation delay difference between the first path L1 and the second path L2 is about 2.5 symbols. In other words, as illustrated in FIG. 10, a reception timing T1 of the first signal via the first path L1 is shifted by about 2.5 symbol from a reception timing T2 of the second signal via the second path L2, and an inter-slot interference is generated due to the propagation delay.

Although the above numerical values and calculations are examples, when communication via the plurality of satellite stations 30 (hereinafter also referred to as satellite diversity communication) is performed using the same band, the reception error rate characteristics deteriorates due to the inter-slot interference and an inter-symbol interference.

Therefore, in order to utilize the transmission and reception diversity using the plurality of satellite stations 30, a mechanism for preventing occurrence or reducing influence of the inter-slot interference and the inter-symbol interference is required.

### <<4. Operation of communication system>>

As described above, in the communication system 1 according to the embodiment of the present disclosure, the ground base station 20 and the terminal device 40 perform the satellite diversity communication by communicating with the plurality of satellite stations 30. At this time, in order to reduce the influence of the propagation delay difference described above, communication is performed by providing a non-transmission symbol segment (example of the second segment) in which transmission data is not included in a part of transmission symbols. Hereinafter, an operation of the communication system 1 that performs the satellite diversity communication by providing the non-transmission symbol segment will be described.

### <4.1. Frame configuration example>

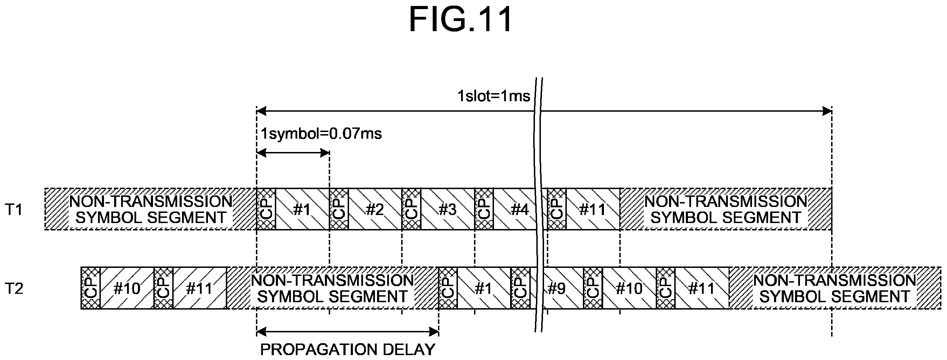

First, an example of the physical layer frame structure used in the communication system 1 according to the embodiment of the present disclosure will be described with reference to FIG. 11. FIG. 11 is a diagram illustrating the example of the physical layer frame configuration according to the embodiment of the present disclosure. In the physical layer frame structure in FIG. 11, the description of the same structure as that in FIG. 10 is omitted.

As illustrated in FIG. 11, in the communication system 1, when the satellite diversity communication is performed, the non-transmission symbol segment is provided in a part of the slot by replacing a part of symbols included in the slot with the non-transmission symbol. In the example in FIG. 11, among the 14 symbols #1 to #14 included in one slot, symbols #12 to #14 are set as the non-transmission symbol segment.

In other words, in the example in FIG. 11, symbols #1 to #11 are transmission symbol segments including the transmission data (example of the first segment), and the non-transmission symbol segment is a segment not including the transmission data (example of the second segment). Here, the transmission data is data to be transmitted to the communication partner, and includes a control signal, a reference signal, user data, and the like.

In FIG. 11, the non-transmission symbol segment is provided at the tail of the slot, but the present disclosure is not limited thereto. The non-transmission symbol segment may be provided anywhere among the head, the tail, and the middle of the slot. In addition, the number of non-transmission symbol segments is not limited to one. In the slot, two or more non-transmission symbol segments may be provided.

In FIG. 11, the non-transmission symbol segment includes three symbols, but the number of symbols is not limited thereto. The number of symbols may be two or less or four or more as long as a length of the non-transmission symbol segment is longer than the propagation delay that occurs. The length of the non-transmission symbol segment that is the number of symbols can be changed according to, for example, the positional relationship among the ground base station 20, the plurality of satellite stations 30, and the terminal device 40.

### <4.2. Example of setting satellite diversity communication>

In the frame configuration used for the satellite diversity communication according to the embodiment of the present disclosure, a configuration illustrated in FIG. 11, for example, may be defined in advance by a standard or the like, or may be set by the ground base station 20.

For example, at least one of the following settings related to the satellite diversity communication of the present embodiment may be determined by the ground base station 20 and notified to the terminal device 40.
- Whether or not to perform satellite diversity communication
- Whether or not to insert non-transmission symbol segment
- Length of non-transmission symbol segment (e.g., number of symbols)
- Insertion position of non-transmission symbol segment
- Information regarding subcarrier spacing

The ground base station 20 determines whether or not to perform the satellite diversity communication according to, for example, capability and position information of the terminal device 40, and notifies the terminal device 40 of information regarding a determination result.

Furthermore, when it is determined to perform the satellite diversity communication, the ground base station 20 determines whether or not to insert the non-transmission symbol segment into the slot, and notifies the terminal device 40 of information regarding a determination result.

Furthermore, when the non-transmission symbol segment is inserted during the satellite diversity communication, the ground base station 20 determines a length of the non-transmission symbol segment. The length of the non-transmission symbol segment is determined according to a difference (path length difference) in the radio wave propagation distance between the ground base station 20 and the terminal device 40. For example, the ground base station 20 determines the length of the non-transmission symbol segment to be longer than the radio wave propagation delay caused by the path length difference between the first path L1 and the second path L2. The length of the non-transmission symbol segment is specified by, for example, the number of symbols, the number of slots, or the number of subframes. The ground base station 20 notifies the terminal device 40 of information regarding the determined length of the non-transmission symbol segment.

The length of the non-transmission symbol segment may vary depending on, for example, a frequency to be used. For example, when different frequencies are used for uplink and downlink communications, the ground base station 20 may determine different lengths of non-transmission symbol segments for uplink and downlink communications.

In addition, the ground base station 20 determines, for example, the insertion position of the non-transmission symbol segment in the slot. The ground base station 20 notifies the terminal device 40 of information regarding the insertion position determined. The information regarding the insertion position is, for example, information indicating whether the non-transmission symbol segment starts from an n-th symbol #n in the slot. Alternatively, the information regarding the insertion position may be, for example, information indicating which position in the slot is set as the non-transmission symbol segment, such as the head or tail.

Furthermore, the ground base station 20 can notify the terminal device 40 of information regarding subcarrier spacing. For example, the terminal device 40 may switch a value of information regarding the satellite diversity communication (information regarding the length of the non-transmission symbol segment, the insertion position, or the like) according to the information regarding subcarrier spacing.

For example, the ground base station 20 notifies the information regarding satellite diversity communication (hereinafter also simply referred to as setting information) when the subcarrier spacing of 15 kHz is used as a basis. The terminal device 40 calculates a value of the setting information in the notified subcarrier spacing according to the setting information and the information regarding the subcarrier spacing notified separately from the ground base station 20. Here, the case where the subcarrier spacing of 15 kHz is used as the basis has been described as an example, but other subcarrier spacings may be used as the basis.

The ground base station 20 notifies the above-described setting information using, for example, system information, RRC signaling, MAC CE, or DCI.

Alternatively, the ground base station 20 may implicitly notify the above-described setting information in association with other information regarding at least one of the ground base station 20, the satellite station 30, and the terminal device 40.

For example, the above-described setting information is associated with position information of the ground base station 20, position information, orbit information, and/or velocity information of the satellite station 30, or position information, radio wave propagation time information for transmission, radio wave propagation time variation information for transmission, and the like of the terminal device 40. Upon receiving these pieces of information from the ground base station 20, the terminal device 40 determines whether to perform the satellite diversity communication, calculates information regarding non-transmission symbol segment, and the like based on the information received.

For example, the length of the non-transmission symbol segment may be determined from a propagation path distance between the ground base station 20 and the terminal device 40. Here, the propagation path distance can be a path length including the satellite station 30 as in the first path L1 and the second path L2 described above. In the case of calculating the propagation path distance including the satellite station 30, the terminal device 40 may calculate a propagation path distance based on altitude and orbit information of the satellite station 30, angle information of the beam cell formed by the satellite station 30, position prediction information in which the satellite station 30 is assumed to move, the altitude information of the terminal device 40, and the like.

Furthermore, the ground base station 20 can notify whether or not to insert the non-transmission symbol segment in association with whether or not to perform the satellite diversity communication. For example, the ground base station 20 inserts the non-transmission symbol segment when the satellite diversity communication is performed, and does not insert the non-transmission symbol segment when the satellite diversity communication is not performed.

Note that information necessary for the above-described implicit notification, in other words, information linked with the above-described setting information, can be notified from the ground base station 20 to the terminal device 40 using, for example, system information, RRC signaling, MAC CE, or DCI.

### <4.3. Transmission process>

Next, a transmission process of the satellite diversity communication according to the present embodiment will be described. The transmission process is performed by the transmission processing unit 212 under the control of the control unit 23 (transmission control unit 232) of the ground station 20 described above. Alternatively, the transmission process is performed by the transmission processing unit 412 under the control of the control unit 43 (transmission control unit 432) of the terminal device 40. In the following description, in order to simplify the description, it is assumed that a control unit of a transmission device performs the transmission process. In addition, here, a case where the non-transmission symbol segment is provided at the tail of the slot as illustrated in FIG. 11 will be described.

The control unit of the transmission device generates a transmission signal from transmission data in the symbols #1 to #11 (second segment) excluding the non-transmission symbol segment, and transmits the transmission signal to the reception device. The control unit of the transmission device does not transmit the transmission signal in the non-transmission symbol segment. In this case, it can be said that the non-transmission symbol segment is a non-transmission segment.

Alternatively, the control unit of the transmission device may generate a transmission signal including the transmission data in the symbols #1 to #11 excluding the non-transmission symbol segment and including a known signal in the non-transmission symbol segment, and transmit the transmission signal to the reception device. The known signal may be, for example, a bit string indicating "0", or may be a signal shared in advance by both the transmission device and the reception device.

As described above, the control unit of the transmission device generates the transmission signal (radio signal) having the first segment including the transmission data and the second segment (non-transmission symbol segment) not including the transmission data, and transmits the transmission signal to the reception device via the plurality of satellite stations 30.

### <4.4. Reception process>

Next, a reception process of the satellite diversity communication according to the present embodiment will be described. The reception process is performed by the reception processing unit 211 under the control of the control unit 23 (reception control unit 231) of the ground station 20 described above. Alternatively, the reception process is performed by the reception processing unit 411 under the control of the control unit 43 (reception control unit 431) of the terminal device 40. In the following description, in order to simplify the description, it is assumed that a control unit of a reception device performs the reception process.

In addition, here, it is assumed that the reception device receives a first reception signal via the first path L1 at the first reception timing T1 and receives a second reception signal via the second path L2 at the second reception timing T2. Since the reception device also receives the second reception signal in addition to the first reception signal, the second reception signal interferes with the first reception signal, and the first reception signal interferes with the second reception signal.

The control unit of the reception device first decodes the first reception signal, and then decodes the second reception signal using the decoded first reception signal.

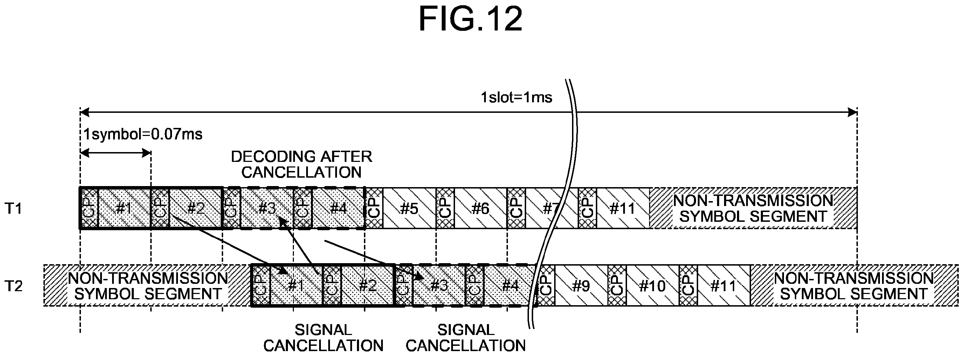

First, a decoding process of the first reception signal will be described with reference to FIG. 12. FIG. 12 is a diagram illustrating the decoding process of the first reception signal according to the embodiment of the present disclosure.

As illustrated in FIG. 12, the control unit of the reception device decodes the first and second symbols #1 and #2 of the first reception signal. As described above, the first reception signal includes the second reception signal as noise, but the first and second symbols #1 and #2 of the first reception signal correspond to the non-transmission symbol segment of the second reception signal. Therefore, the control unit of the reception device can decode the first and second symbols #1 and #2 of the first reception signal without being affected by the second reception signal.

Next, the control unit of the reception device decodes the third and fourth symbols #3 and #4 of the first reception signal. As illustrated in FIG. 12, the third and fourth symbols #3 and #4 of the first reception signal include the first and second symbols #1 and #2 of the second reception signal as noise.

Here, the first reception signal and the second reception signal are the same transmission signals via different propagation paths. Therefore, the first and second symbols #1 and #2 of the second reception signal are the same signals as the first and second symbols #1 and #2 of the first reception signal except for the reception timing.

Therefore, the control unit of the reception device removes (cancels) the first and second symbols #1 and #2 of the second reception signal included in the third and fourth symbols #3 and #4 of the first reception signal using the already decoded first and second symbols #1 and #2 of the first reception signal. The control unit of the reception device decodes the third and fourth symbols #3 and #4 of the first reception signal after cancellation.

Similarly, the control unit of the reception device decodes all the symbols included in the first reception signal by decoding the symbols after the fourth symbol #4 of the first reception signal.

As described above, among the first reception signal, the control unit of the reception device cancels the interference signal included in the symbol (e.g., third and fourth symbols #3 and #4) of the first reception signal by using the signal of the symbol corresponding to the non-transmission symbol segment of the second reception signal (e.g., first and second symbols #1 and #2) to decode the first reception signal.

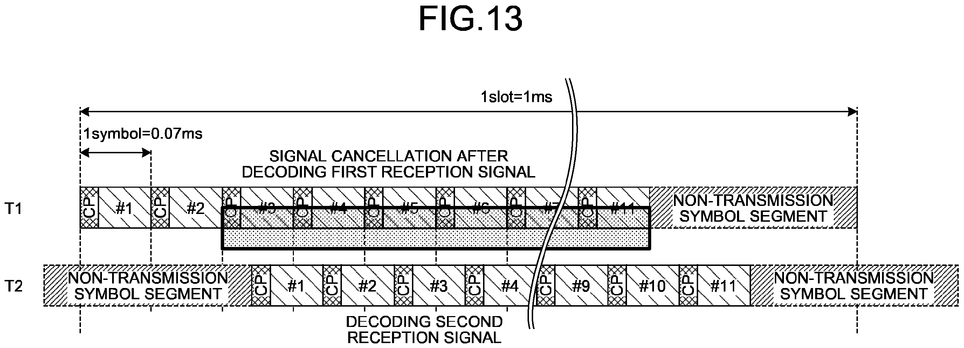

Next, the decoding process of the second reception signal will be described with reference to FIG. 13. FIG. 13 is a diagram illustrating the decoding process of the second reception signal according to the embodiment of the present disclosure.

As illustrated in FIG. 13, after decoding the first reception signal (see FIG. 12), the control unit of the reception device removes (cancels) the first reception signal included in the second reception signal. Next, the control unit of the reception device decodes the second reception signal after removal.

As a result, in the non-transmission symbol segment, the control unit of the reception device decodes the other reception signal by canceling the influence of the one reception signal by using the fact that the one reception signal does not interfere with the other reception signal.

### <4.5. Sequence example>

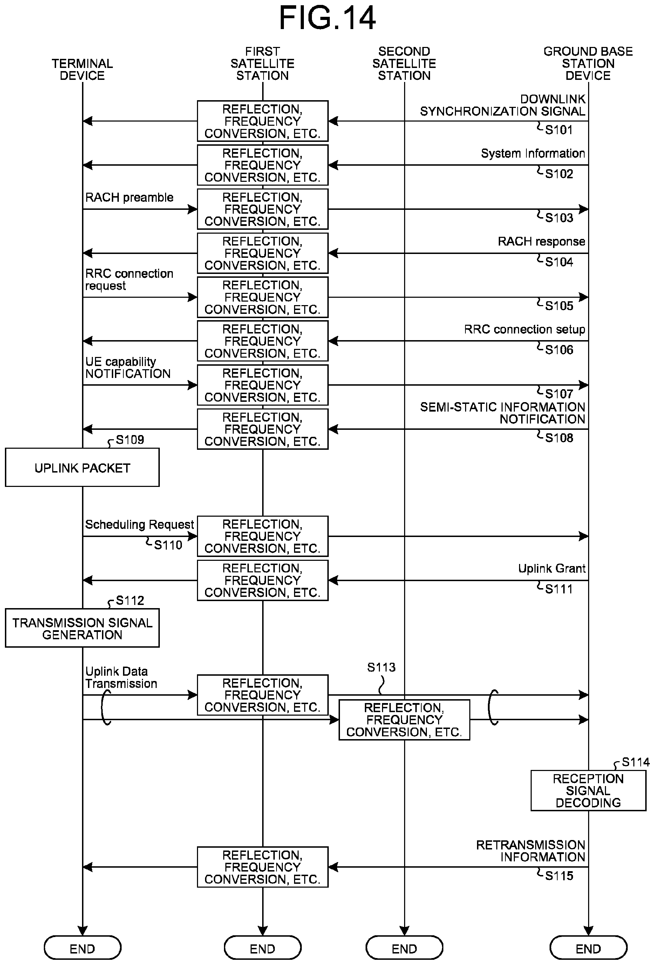

FIG. 14 is a sequence diagram illustrating an operation of the satellite diversity communication of the communication system 1 according to the embodiment of the present disclosure. Hereinafter, the operation of the communication system 1 in a case where the satellite diversity communication is performed in the uplink will be described with reference to FIG. 14.

Note that, here, a case where the communication system 1 performs the satellite diversity communication using the first satellite station 30₁ and the second satellite station 30₂ in the uplink will be described, but the communication system 1 can similarly perform the satellite diversity communication also in the downlink.

Furthermore, here, a case where the satellite diversity communication is performed in uplink data transmission will be described, but the present disclosure is not limited thereto. For example, the communication system 1 can similarly perform the satellite diversity communication in an initial access operation and control signal transmission.

Furthermore, here, unless otherwise specified, in a case where the communication system 1 does not perform the satellite diversity communication, communication is performed using the first satellite station 30₁.

Further, the satellite station 30 reflects a signal received from the transmission device (ground base station 20 or terminal device 40) directly to the reception device (ground base station 20 or terminal device 40) or performs processing such as frequency conversion and transmits the signal.

First, the terminal device 40 receives a synchronization signal from the ground base station 20 (Step S101), and receives system information (Step S102). At this time, the ground base station 20 may notify the terminal device 40 of information for performing the satellite diversity communication of the present embodiment as the system information.

Next, the terminal device 40 executes a random access procedure with the ground base station 20 by using 2-STEP random access, 4-STEP random access, or the like. In the example in FIG. 14, the terminal device 40 executes the random access procedure by transmitting a random access preamble to the ground base station 20 (Step S103) and receiving a random access response from the ground base station 20 (Step S104) .

The terminal device 40 transmits an RRC connection request to the ground base station 20 (Step S105). Upon receiving the RRC connection request, the ground base station 20 transmits RRC connection setup information to the terminal device 40 (Step S106) . Thereafter, the terminal device 40 transmits its own capability information to the ground base station 20 (Step S107) .

The ground base station 20 notifies the terminal device 40 of semi-static information by RRC signaling (Step S108). The semi-static information may include semi-static configuration information for performing the satellite diversity communication of the present embodiment, such as the length of the non-transmission symbol segment.

Here, when an uplink packet is generated on a side of the terminal device 40 (Step S109), the terminal device 40 requests the ground base station 20 to perform uplink scheduling as necessary (Step S110). When receiving a scheduling request, the ground base station 20 transmits uplink grant information to the terminal device 40 (Step S111). Note that the uplink grant information may include dynamic setting information for performing the satellite diversity communication of the present embodiment.

The terminal device 40 performs the transmission process based on the satellite diversity communication of the present embodiment, and generates the transmission signal (Step S112). The terminal device 40 transmits the transmission signal via the first satellite station 30₁ and the second satellite station 30₂ (Step S113) .

The ground base station 20 performs the reception process based on the satellite diversity communication of the embodiment to decode the reception signal (Step S116) . The ground base station 20 notifies the terminal device 40 of the information regarding the reception result as information regarding retransmission (Step S117). The information regarding retransmission includes, for example, information regarding ACK/NACK.

### <<5. Modifications>>

### <5.1. First modification>

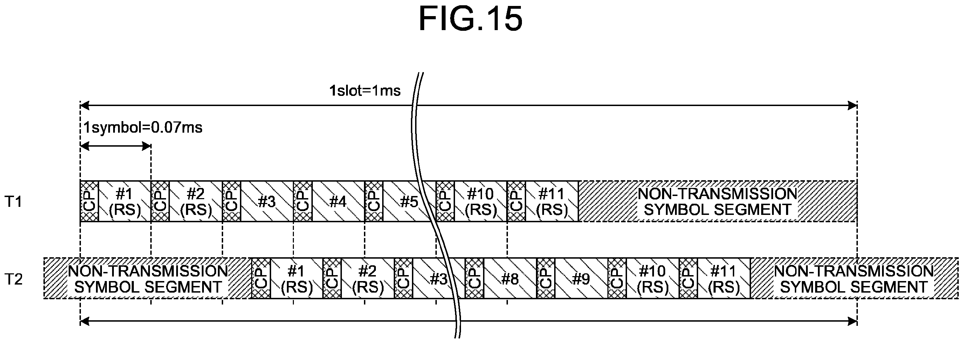

A reference signal (RS) may be arranged in a symbol whose reception timing overlaps with the non-transmission symbol segment of another reception signal among the reception signals of the above-described embodiment. Such a case will be described with reference to FIG. 15.

FIG. 15 is a diagram illustrating an example of a frame configuration according to a first modification of the embodiment of the present disclosure. In FIG. 15, the first and second symbols #1 and #2 of the first reception signal whose reception timing is T1 overlap with the non-transmission symbol segment of the second reception signal whose reception timing is T2. Further, the tenth and eleventh symbols #10 and #11 of the second reception signal overlap with the non-transmission symbol segment of the first reception signal.

Therefore, in the communication system 1 according to the present modification, reference signals are arranged in the first, second, tenth, and eleventh symbols #1, #2, #10, and #11 of the transmission signal. As described above, these symbols are less likely to receive interference from other reception signals when received. Therefore, the reception device can more accurately decode the reference signals arranged in these symbols. The reference signal is, for example, a signal used for channel estimation. Therefore, by accurately decoding the reference signal, the reception device can suppress deterioration of channel estimation accuracy and can further improve decoding accuracy of the reception signal.

In FIG. 15, the reference signals are arranged in all the symbols overlapping the non-transmission symbol segments of the other reception signal, but the present disclosure is not limited thereto. The reference signal may be arranged not in all symbols but in at least some symbols.

In other words, in the frame configuration according to the present modification, the reference signal can be arranged in at least one of the symbols (first, second, tenth, and eleventh symbols #1, #2, #10, and #11 in FIG. 15) included in the segment (example of a third segment) adjacent to the non-transmission symbol segment and having the same length as the non-transmission symbol segment. Note that, for example, it is assumed that the transmission data is transmitted in a symbol in which no reference signal is arranged among symbols in the segment.

For example, arrangement of the reference signals when the satellite diversity communication is not performed or when the non-transmission symbol segment is not inserted even though the satellite diversity communication is performed may be the same as or different from that in FIG. 15. In other words, in the case of communication in which the non-transmission symbol segment is not inserted, the reference signal may be arranged in the first, second, tenth, and eleventh symbols #1, #2, #10, and #11, or may be arranged in other symbols. An arrangement pattern of the reference signals can be switched depending on a presence or absence of the non-transmission symbol segment. Note that the arrangement pattern of the reference signals may be defined as a table of antenna ports of the transmission device.

### <5.2. Second modification>

In the above-described embodiment, the plurality of non-geostationary satellites (satellite stations 30) having the same altitude is used for the satellite diversity communication, but the present disclosure is not limited thereto. For example, the satellite diversity communication may be performed using a plurality of non-ground stations (e.g., satellite stations 30) having different altitudes.

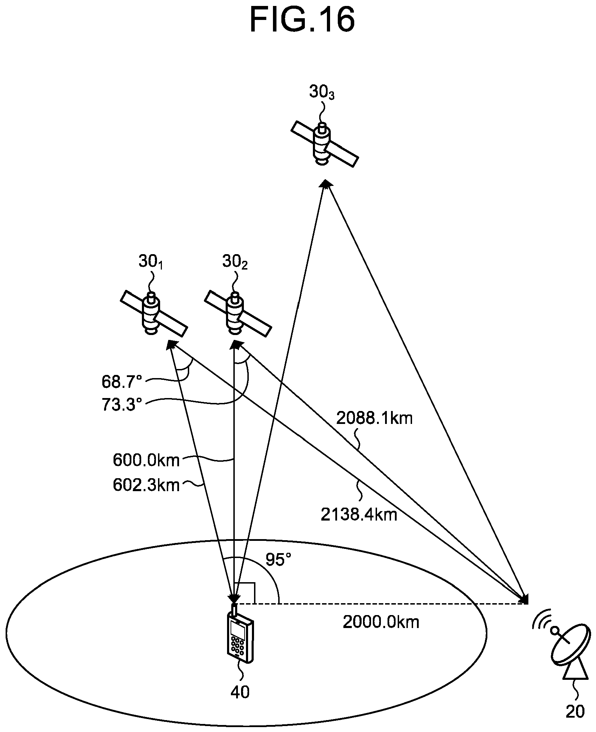

FIG. 16 is a diagram illustrating an example of the communication system 1 according to a second modification of the embodiment of the present disclosure. As illustrated in FIG. 16, in the communication system 1 according to the present modification, in addition to the first and second satellite stations 30₁ and 30₂ having the same altitude, the satellite diversity communication is performed using a third satellite station 30₃ that is, for example, a geostationary earth orbiting satellite having an altitude higher than the first and second satellite stations 30₁ and 30₂.

The ground base station 20 can select at least two of the first to third satellite stations 30₁ to 30₃ to perform the satellite diversity communication.

Note that, in the communication system 1 in FIG. 16, there are two low earth orbiting satellites and one geostationary satellites, but the present disclosure is not limited thereto. There may be one low earth orbiting satellite, or three or more low earth orbiting satellites. In addition, there may be two or more geostationary earth orbiting satellite.

Furthermore, the ground base station 20 may provide a basic coverage cell via the third satellite station 30₃ that is a geostationary earth orbiting satellite, for example, and may provide a capacity booster cell via the first and second satellite stations 30₁ and 30₂ that are low earth orbiting satellites. This configuration is realized by, for example, dual connectivity. In other words, the third satellite station 30₃ that is the geostationary earth orbiting satellite may operate as, for example, a master cell group (MCG), and the first and second satellite stations 30₁ and 30₂ that are low earth orbiting satellites may operate as, for example, a secondary cell group (SCG). At this time, for example, the ground base station 20 may perform C/U separation by dual connectivity, such as by performing transmission of a control plane via the third satellite station 30₃ and performing transmission of a user plane via the first and second satellite stations 30₁ and 30₂.

In this case, the ground base station 20 may apply, for example, the satellite diversity communication according to the present embodiment to the SCG and not to the MCG. Alternatively, the ground base station 20 may apply the satellite diversity communication according to the present embodiment to the MCG but not to the SCG, or may apply the satellite diversity communication according to the present embodiment to both the SCG and the MCG.

Further, it is assumed that the satellite stations 30 having different altitudes, such as the first to third satellite stations 30₁ to 30₃, provide a 5G service. In this case, as mobility management, the terminal device 40 in an idle mode may select a cell from the satellite station 30 with a higher altitude (e.g., third satellite station 30₃) as the satellite station 30 to perform camp-on. Alternatively, in order to perform more reliable communication, the terminal device 40 may select a cell from the satellite station 30 with high altitude that is capable of performing the satellite diversity communication according to the present embodiment as the satellite station 30 to perform camp-on.

As a result, the terminal device 40 can reduce a frequency of cell reselection and can also set a longer DRX cycle for paging reception. Note that the terminal device 40 in the connected mode can receive a service by, for example, being connected to a basic coverage cell via the third satellite station 30₃ having a high altitude and being connected to the capacity booster cell via the first and second satellite stations 30₁ and 30₂ having a low altitude.

Note that the terminal device 40 in the connected mode may be connected to the basic coverage cell via a plurality of third satellite stations 30₃ capable of performing the satellite diversity communication of the present embodiment. As a result, the terminal device 40 can perform the satellite diversity communication using the plurality of third satellite stations 30₃. Therefore, even when a quality of the propagation path with one of the plurality of third satellite stations 30₃ deteriorates, the terminal device 40 can perform communication using the propagation path with remaining third satellite stations 30₃. As a result, the terminal device 40 can perform more stable communication.

### <<6. Other embodiments>>

The above-described embodiment and modifications are examples, and various modifications and applications are possible.

For example, in the above-described embodiment and modifications, the case where the satellite diversity communication is performed in the uplink communication has been mainly described, but the present disclosure is not limited thereto. For example, the satellite diversity communication can be similarly performed in the downlink communication. Alternatively, the satellite diversity communication is not limited to communication between the ground base station 20 and the terminal device 40, and can also be applied to sidelink communication such as communication between a relay station and the terminal device 40 or communication between the terminal devices 40.

Furthermore, in the above-described embodiment and modifications, the base station is a base station on the ground (ground base station 20), but the present disclosure is not limited thereto. The base station may be a non-ground base station other than the ground. The non-ground base station may be a communication apparatus provided outside the ground, such as the satellite station, or a communication apparatus mounted on a drone, a balloon, an airplane, or the like.

In addition, in the above-described embodiment and modifications, the plurality of paths having different path lengths are the first and second paths L1 and L2 including the different first and second satellite stations 30₁ and 30₂, but the present disclosure is not limited thereto. For example, in addition to the satellite station 30, a plurality of paths may be paths via reflectors that reflect radio waves. In this case, the satellite station 30 of the above-described embodiment and modifications may be replaced with the reflector. Note that the reflector that reflects radio waves is also called, for example, intelligent surface (IS), large intelligent surface (LIS), or reconfigurable intelligent surface (RIS).

For example, the control device that controls the transmission device and the reception device of the present embodiment may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the program is installed on a computer, and the above-described processes are executed to configure the control device. Here, the control device may be a device (e.g., personal computer) outside the transmission device or the reception device. Furthermore, the control device may be a device (e.g., control unit) inside the transmission device or the reception device.

In addition, the above communication program may be stored in a disk device included in a server device on a network such as the Internet so that the communication program can be downloaded to the computer. In addition, the above-described functions may be realized by cooperation of an operating system (OS) and application software. In this case, a portion other than the OS may be stored in a medium and distributed, or a portion other than the OS may be stored in a server device and downloaded to the computer.

Among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the above document and the drawings can be arbitrarily changed unless otherwise specified. For example, various types of information illustrated in each drawing are not limited to the illustrated information.

In addition, each component of each device illustrated in the drawings is functionally conceptual, and is not necessarily physically configured as illustrated in the drawings. In other words, a specific form of distribution and integration of each device is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in a region in which the processing content do not contradict each other. Furthermore, the order of each step illustrated in the sequence diagram of the above-described embodiment can be appropriately changed.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like (i.e., configuration of a part of device).

Note that, in the present embodiment, the system means a set of a plurality of components (devices, modules (parts), etc.), and it does not matter whether or not all the components are in the same housing. Therefore, a plurality of devices housed in separate housings and connected via a network and one device in which a plurality of modules is housed in one housing are both systems.

Furthermore, for example, the present embodiments can adopt a configuration of cloud computing in which one function is shared and processed by a plurality of devices in cooperation via a network.

### <<6. Conclusion>>

Although the embodiments of the present disclosure have been described above, the technical scope of the present disclosure is not limited to the above-described embodiments as it is, and various modifications can be made without departing from the gist of the present disclosure. In addition, the components of different embodiments and modifications may be appropriately combined.

Note that the effects of each embodiment described in the present specification are merely examples and not limited thereto, and other effects may be provided.

The present technology can also have the following configurations.
(1) A communication apparatus comprising:
   a control unit configured to generate a radio signal and transmit the radio signal via a plurality of propagation paths, the radio signal having a first segment including transmission data and a second segment not including the transmission data.
(2) The communication apparatus according to (1), wherein the plurality of propagation paths includes non-ground stations different from each other.
(3) The communication apparatus according to (2), wherein the plurality of propagation paths includes the non-ground stations at different altitudes from each other.
(4) The communication apparatus according to any one of (1) to (3), wherein the plurality of propagation paths includes reflectors different from each other.
(5) The communication apparatus according to any one of (1) to (4), wherein the second segment is a non-transmission segment not transmitting a transmission signal.
(6) The communication apparatus according to any one of (1) to (5), wherein the second segment has a length according to a path length difference of the plurality of propagation paths.
(7) The communication apparatus according to any one of (1) to (6), wherein the second segment is arranged at a head or a tail of the radio signal.
(8) The communication apparatus according to any one of (1) to (7), wherein the control unit arranges a reference signal in at least a part of a third segment of the first segment, the third segment being adjacent to the second segment and having a same length as the second segment.
(9) The communication apparatus according to any one of (1) to (8), wherein the first segment includes a plurality of symbols having a cyclic prefix added at a head or a tail.
(10) A communication apparatus comprising:
   a control unit configured to receive a radio signal via a plurality of propagation paths, the radio signal having a first segment including transmission data and a second segment not including the transmission data.
(11) The communication apparatus according to (10), wherein
   the control unit cancels an interference signal included in a first radio signal and decodes the first radio signal by using a signal in the first segment of the first radio signal received via a first propagation path among the plurality of propagation paths, the first segment corresponding to the second segment of a second radio signal received via a second propagation path among the plurality of propagation paths.
(12) The communication apparatus according to (11), wherein the control unit cancels an interference signal included in the second radio signal and decodes the second radio signal using the first radio signal decoded.
(13) A communication system comprising:
   a transmission device;
   a plurality of satellite stations; and
   a reception device, wherein
   the transmission device generates a radio signal having a first segment including transmission data and a second segment not including the transmission data, and transmits the radio signal via each of the plurality of satellite stations,
   the plurality of satellite stations receives the radio signal transmitted by the transmission device and transmits the radio signal to the reception device, and
   the reception device receives the radio signal propagated through a plurality of propagation paths by receiving the radio signal transmitted by each of the plurality of satellite stations.
(14) A communication method comprising:
   generating a radio signal having a first segment including transmission data and a second segment not including the transmission data, and transmitting the radio signal via a plurality of propagation paths.
(15) A communication method comprising:
   receiving a radio signal via a plurality of propagation paths, the radio signal having a first segment including transmission data and a second segment not including the transmission data.

### Reference Signs List

1 COMMUNICATION SYSTEM
10 MANAGEMENT DEVICE
20 GROUND STATION
30, 50 SATELLITE STATION
40 TERMINAL DEVICE
60 BASE STATION
70 AIRCRAFT STATION
11 COMMUNICATION UNIT
21, 31, 41 WIRELESS COMMUNICATION UNIT
12, 22, 32, 42 STORAGE UNIT
13, 23, 33, 43 CONTROL UNIT

## Claims

1. A communication apparatus comprising:
a control unit configured to generate a radio signal and transmit the radio signal via a plurality of propagation paths, the radio signal having a first segment including transmission data and a second segment not including the transmission data.

2. The communication apparatus according to claim 1, wherein the plurality of propagation paths includes non-ground stations different from each other.

3. The communication apparatus according to claim 2, wherein the plurality of propagation paths includes the non-ground stations at different altitudes from each other.

4. The communication apparatus according to claim 1, wherein the plurality of propagation paths includes reflectors different from each other.

5. The communication apparatus according to claim 1, wherein the second segment is a non-transmission segment not transmitting a transmission signal.

6. The communication apparatus according to claim 1, wherein the second segment has a length according to a path length difference of the plurality of propagation paths.

7. The communication apparatus according to claim 1, wherein the second segment is arranged at a head or a tail of the radio signal.

8. The communication apparatus according to claim 1, wherein the control unit arranges a reference signal in at least a part of a third segment of the first segment, the third segment being adjacent to the second segment and having a same length as the second segment.

9. The communication apparatus according to claim 1, wherein the first segment includes a plurality of symbols having a cyclic prefix added at a head or a tail.

10. A communication apparatus comprising:
a control unit configured to receive a radio signal via a plurality of propagation paths, the radio signal having a first segment including transmission data and a second segment not including the transmission data.

11. The communication apparatus according to claim 10, wherein
the control unit cancels an interference signal included in a first radio signal and decodes the first radio signal by using a signal in the first segment of the first radio signal received via a first propagation path among the plurality of propagation paths, the first segment corresponding to the second segment of a second radio signal received via a second propagation path among the plurality of propagation paths.

12. The communication apparatus according to claim 11, wherein the control unit cancels an interference signal included in the second radio signal and decodes the second radio signal using the first radio signal decoded.

13. A communication system comprising:
a transmission device;
a plurality of satellite stations; and
a reception device, wherein
the transmission device generates a radio signal having a first segment including transmission data and a second segment not including the transmission data, and transmits the radio signal via each of the plurality of satellite stations,
the plurality of satellite stations receives the radio signal transmitted by the transmission device and transmits the radio signal to the reception device, and
the reception device receives the radio signal propagated through a plurality of propagation paths by receiving the radio signal transmitted by each of the plurality of satellite stations.

14. A communication method comprising:
generating a radio signal having a first segment including transmission data and a second segment not including the transmission data, and transmitting the radio signal via a plurality of propagation paths.

15. A communication method comprising:
receiving a radio signal via a plurality of propagation paths, the radio signal having a first segment including transmission data and a second segment not including the transmission data.
